Europäisches Patentamt

European Patent Office

Office européen des brevets

(19)

(11) Publication number: **0 416 124 A1**

(12) **EUROPEAN PATENT APPLICATION**
**published in accordance with Art.**
**158(3) EPC**

(21) Application number: 90904663.3

(22) Date of filing: 20.03.90

(86) International application number:
PCT/JP90/00370

(87) International publication number:
WO 90/11178 (04.10.90 90/23)

(51) Int. Cl.⁵: **B29C 67/00**, B29C 35/08,
B29C 35/10, B29C 39/02,
G03F 7/20, G03F 7/26,
G05D 3/00, G06F 15/60

(30) Priority: 27.03.89 JP 71927/89

(43) Date of publication of application:
13.03.91 Bulletin 91/11

(84) Designated Contracting States:
DE FR GB NL

(71) Applicant: SONY CORPORATION
7-35 Kitashinagawa 6-Chome Shinagawa-ku
Tokyo 141(JP)

(72) Inventor: MAKINO, Masahiro Sony

Corporation
7-35, Kitashinagawa 6-chome Shinagawa-ku
Tokyo 141(JP)
Inventor: ITOH, Kazumine Sony Corporation
7-35, Kitashinagawa 6-chome Shinagawa-ku
Tokyo 141(JP)

(74) Representative: Ayers, Martyn Lewis Stanley
et al
J.A. KEMP & CO. 14 South Square Gray's Inn
London, WC1R 5EU(GB)

(54) **METHOD OF FORMING THREE-DIMENSIONAL SHAPE.**

(57) The beam from a laser beam oscillator is focus-controlled and projected onto the surface of a liquid curable resin material so as to form a cured resin layer having a pattern in accordance with the shape of a resolved plane of a desired three-dimensional image which is resolved unidirectionally. Next, a liquid photocurable resin is positioned on the cured resin layer and the controlled focus beam is again applied to the surface of the liquid photocurable resin in the same way as above so as to laminate the cured resin layer. In this manner, cured resin layers are sequentially laminated to form an arbitrary, three-dimensional shape. In this method, if the three-dimensional shape has a portion branching sideways from an intermediate portion and the lowermost end surface of this branch portion is above the lowermost end surface of the three-dimensional shape, a continuing dummy cured resin layer is preliminarily formed on the lowermost end surface of the branch portion in conformity with the formation of the three-dimensional shape.

FIG. 5

## METHOD FOR PRODUCING THREE-DIMENSIONAL FIGURE PRODUCT

TECHNICAL FIELD

The present invention relates to a novel method for producing three-dimensional figure product. More specifically, this invention relates to a method for producing three-dimensional figure product in which exposure beams irradiate a liquid photo-curable resin to form a three-dimensional figure product on the basis of any desired one of designed three-dimensional object images. The present invention relates more particularly to a method for producing three-dimensional figure product in which exposure beams irradiate a liquid surface of a liquid photo-curable resin in response to the shapes of exploded planes exploded into a certain direction of a three-dimensional object image to form a cured resin layer and the cured resin layer is sequentially laminated to produce a three-dimensional figure product. Also, the present invention is to provide a novel method for producing three-dimensional figure product in which, when the three-dimensional figure product is partly branched in the lateral direction and has branched portions which do not reach the lowermost portion of the three-dimensional figure product, the positional displacement of the branched portion relative to the three-dimensional figure product can be avoided and a three-dimensional figure product can be produced at high accuracy.

BACKGROUND ART

It has been proposed to produce a product of a predetermined shape by irradiating exposure beams on a liquid photo-curable resin. For example, Japanese Patent Laid-Open Gazette No. 61-114817 describes such method for producing three-dimensional figure product.

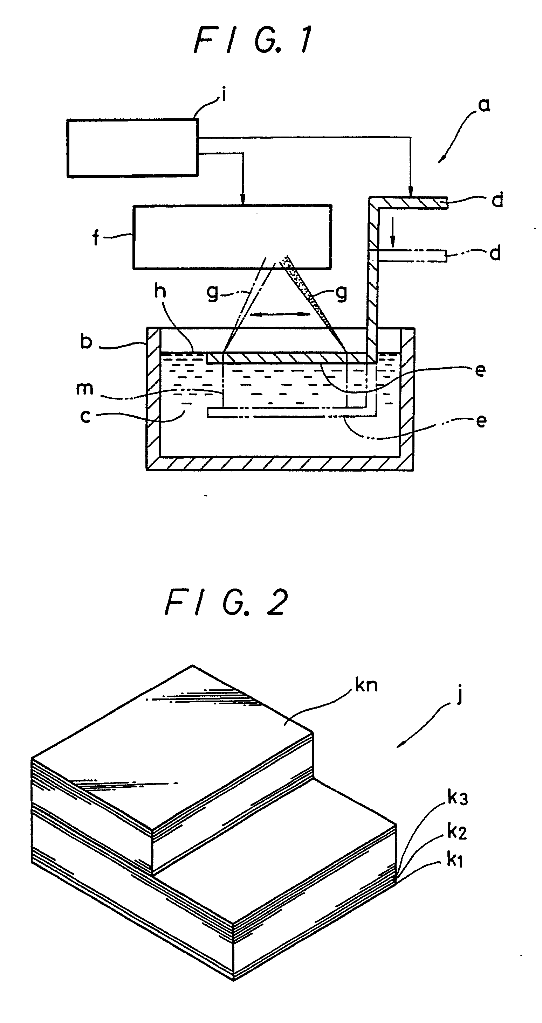

Fig. 1 illustrates an example a of an apparatus which implements the above-mentioned method for producing three-dimensional figure product.

In Fig. 1, reference letter b designates a resin storage tank in which there is stored a liquid photo-curable resin c which is cured by the irradiation of predetermined exposure beams, for example, ultraviolet rays, d an elevator having a horizontal plate-shaped stage e and which is moved by a moving device not shown, f a beam scanner located above the resin storage tank b for converging and irradiating an exposure beam g on a liquid surface h of the liquid photo-curable resin c and i a shape-forming controller. The scanning of exposure beam g on the liquid surface h by the beam scanner f and the movement of the elevator d are controlled by the shape-forming controller i .

When a predetermined three-dimensional figure product is produced, as shown by a solid line in Fig. 1, the elevator d is moved in the initial position such that the liquid photo-curable resin c of a predetermined thickness is located on the stage e .

Then, the liquid surface h is scanned by the exposure beam g . In this scanning, the raster scanning is carried out with patterns corresponding to a number of planes k, k, ... (referred to hereinafter as [exploded planes]) which are provided by exploding a designed image j in one direction thereof. If such beam scanning is carried out, then the liquid photo-curable resin c is cured at the portion thereof irradiated with the beams, i.e., cured to a sheet-shaped resin of the same shape as that of the exploded plane $k_1$ of the liquid surface h , resulting in a certain cured resin layre $\ell_1$ being formed. Each time one cured resin layer $\ell$ is formed, the elevator d is moved downwards by a predetermined pitch, that is, a pitch corresponding to an exploded pitch at which the three-dimensional object image j is exploded into a number of exploded planes k, k, ... in one direction. Thus, the liquid photo-curable resin c is flowed onto the cured resin layer $\ell$ so as to have a thickness of one pitch, whereby the beam scanning is performed on the next exploded plane $k_2$ to form other cured resin layer $\ell_2$. At that time, the cured resin layer $\ell_2$ is bonded to the preceding cured resin layer $\ell_1$.

Consequently, a new cured resin layer $\ell_n$ is sequentially laminated on the previously-formed cured resin layer $\ell_{n-1}$, whereby a desired three-dimensional figure product m is formed by a large number of laminated cured resin layers $\ell, \ell, ...$

According to the above-mentioned method for producing three-dimensional figure product, the three-dimensional figure product m can be produced on the basis of the freely-designed three-dimensional object image j so that, as compared with a prior-art method for producing three-dimensional figure product by the use of a metal mold, a three-dimensional figure product can be immediately produced as an experiment. Thus, the development work from the design to the mass-production can be carried out in a short period of time and at low cost.

In the above-mentioned method for producing three-dimensional figure product, however, the respective cured resin layers $\ell, \ell, ...$ are sequentially laminated on the stage e to form the three-dimensional figure product m so that, when the three-dimensional figure product is partly branched in the lateral direction at its midway to have a branched portion which does not reach the lowermost portion of the three-dimensional figure product, the branched portion can not be unitarily formed with the portions to be laminated, the three-dimensional figure product can not be presented precisely even though they can be unitarily formed with the laminated portions or that a three-dimensional figure product whose shape is partly or wholly damaged is produced.

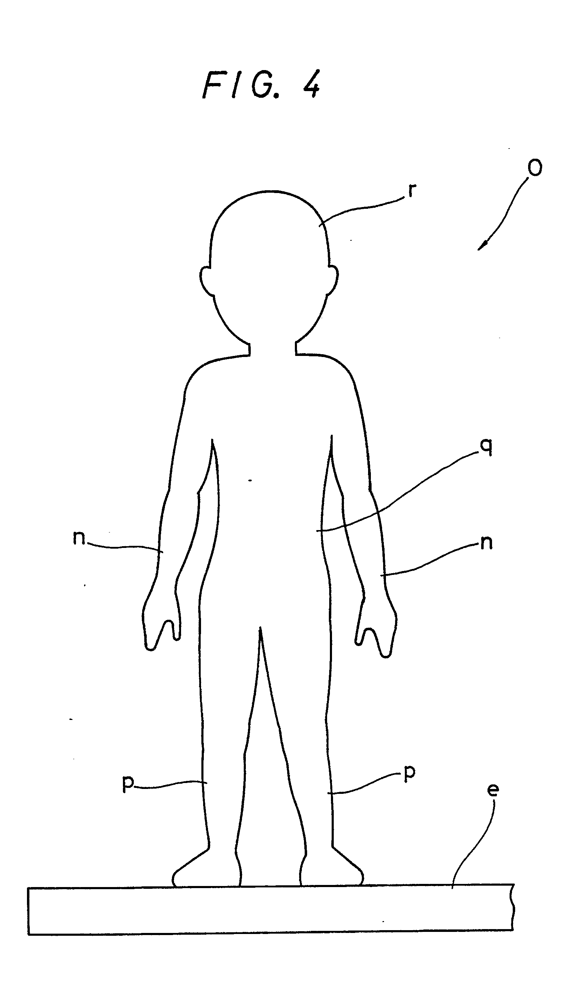

For example, if a three-dimensional object image designed is a human body image o whose arms n , n are hanging in substantially the downward direction as shown in Fig. 4, cured resin layers forming his legs p , p , trunk q , head r or the like are formed by sequentially laminating cured resin layers from the cured resin layers forming the lower end faces of legs p , p , that is, the first cured resin layers on the stage e , thus the images being formed continuously without being dropped out. However, the production of the cured resin layers forming the arms n , n are not performed on the stage e and the production thereof is started under the condition that the positional relationship relative to other portions (legs p , p and the trunk q ) of the three-dimensional object image o is not determined, the cured resin layers forming the arms n , n are floated in the liquid photo-curable resin c until the upper portions of the arms n , n are unitarily formed with the trunk q . Accordingly, the respective cured resin layers forming the arms n , n are inevitably laminated with a displaced positional relationship, the arms are connected to the trunk q with a displaced positional relationship or the arms are not unitarily formed with the trunk q , thus resulting in a deformed shape in which the arms n , n are lost.

Particularly, in the supply-process of the liquid photo-curable resin c onto the previously-cured resin layer e thus formed, the previously-cured resin layer is moved downwards together with the stage e so that the liquid photo-curable resin c is flowed onto the previously-cured resin layer, whereby the respective cured resin layers constructing the arms n , n are moved by the flow of the resultant liquid photo-curable resin c on the surface layer. In that case, the following cured resin layers are laminated with the positional displacement, resulting in a three-dimensional figure product of shape different from that of the designed human body object image being produced.

Furthermore, if it is not the above-mentioned extreme, for example, if the three-dimensional object image has formed on a main portion thereof a protruded portion which is shaped as eaves protruded in the lateral direction, the production of cured resin layers corresponding to the lower end face of the protruded portion is started under the condition that only the base end portion thereof is coupled to the main portion and that other portions than the base end portion are floated in the liquid photo-curable resin. Then, it is frequently observed that a cured resin layer of the next divided plane is laminated on the previously-cured resin layer under the condition that other portions than the base end portion are displaced relative to the main portion in the left to right direction or in the thickness direction.

DISCLOSURE OF INVENTION

Therefore, according to the method for producing three-dimensional figure product, in order to solve the aforenoted problems, when the three-dimensional figure product is partly branched in the lateral direction and has branched portions which do not reach the lowermost portion of the three-dimensional figure product, a continuous dummy cured resin layer is formed beforehand on the lower side of the branched portion.

Thus, according to the method for producing three-dimensional figure product of the present invention, when the three-dimensional figure product is partly branched in the lateral direction and has the branched portions which do not reach the lowermost portion of the three-dimensional figure product, the branched portion can be prevented from being floated in the liquid photo-curable resin, the respetive cured resin layers laminated can be prevented from being displaced positionally and that a desired three-dimensional figure product can be produced at high accuracy.

BRIEF DESCRIPTION OF DRAWINGS

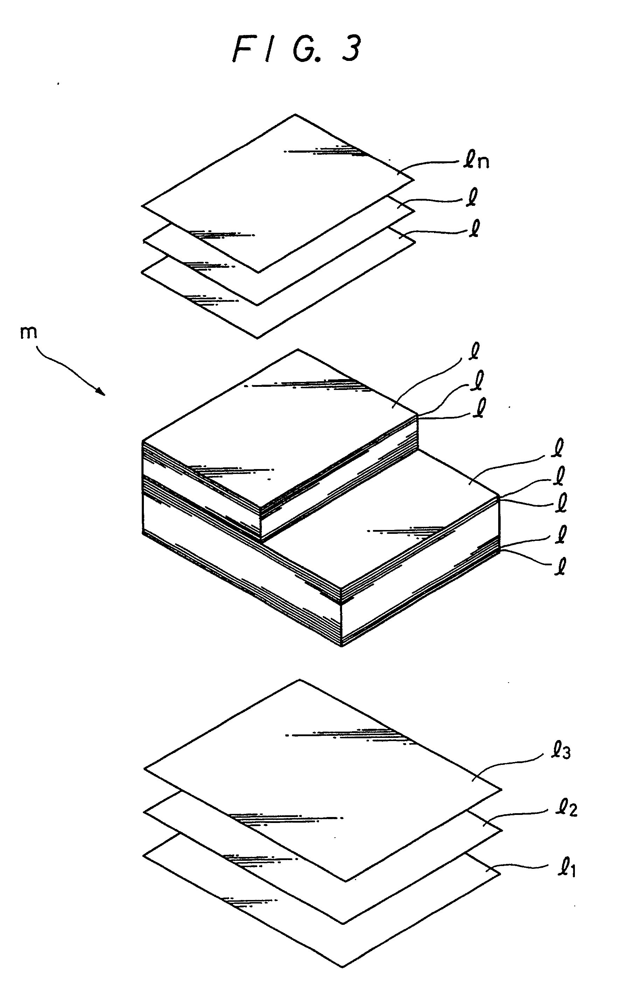

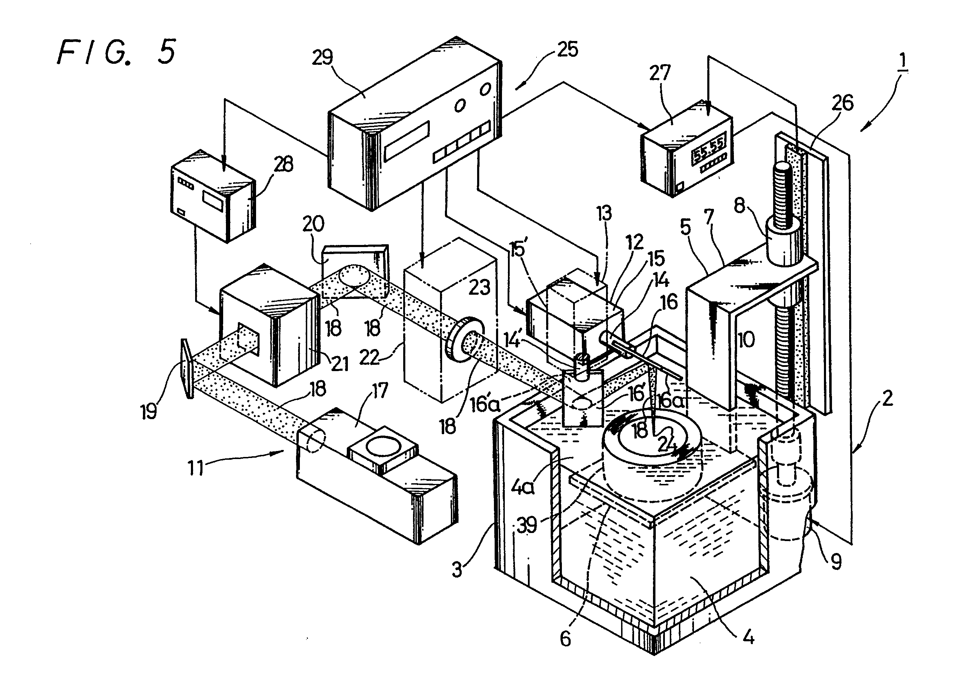

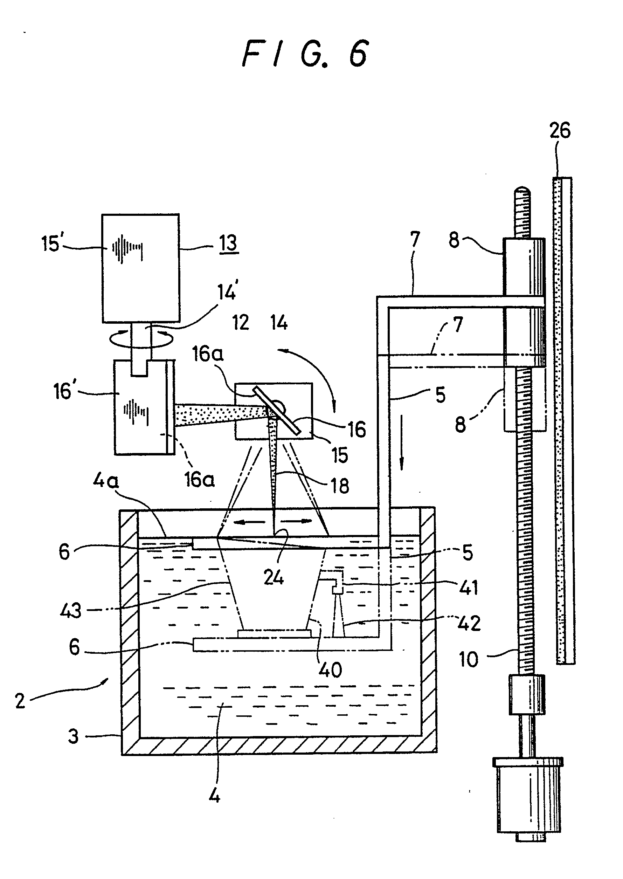

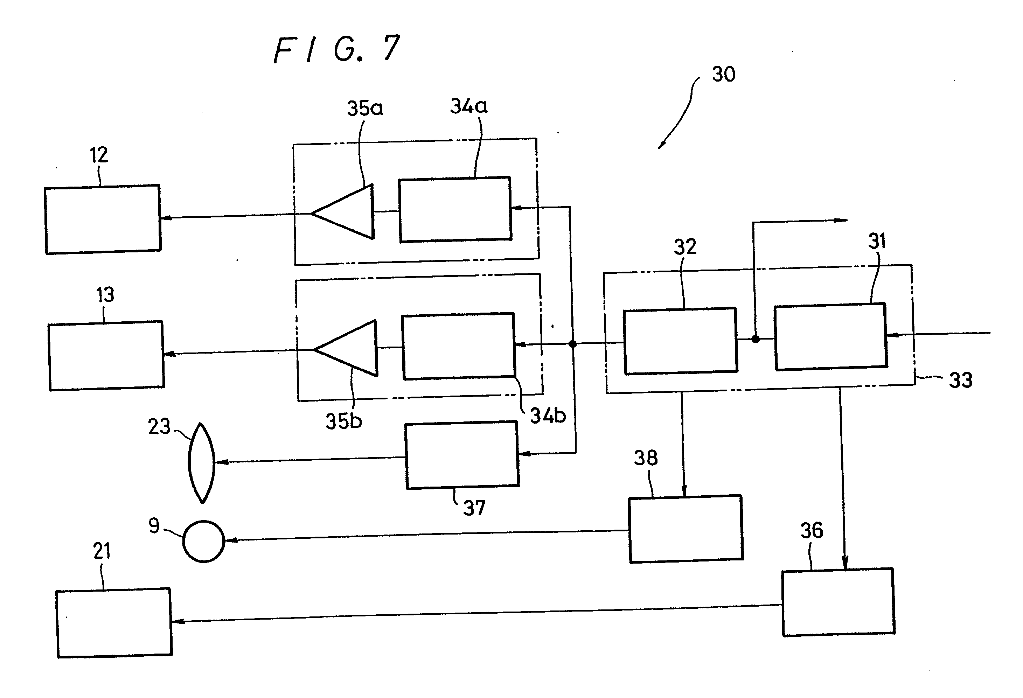

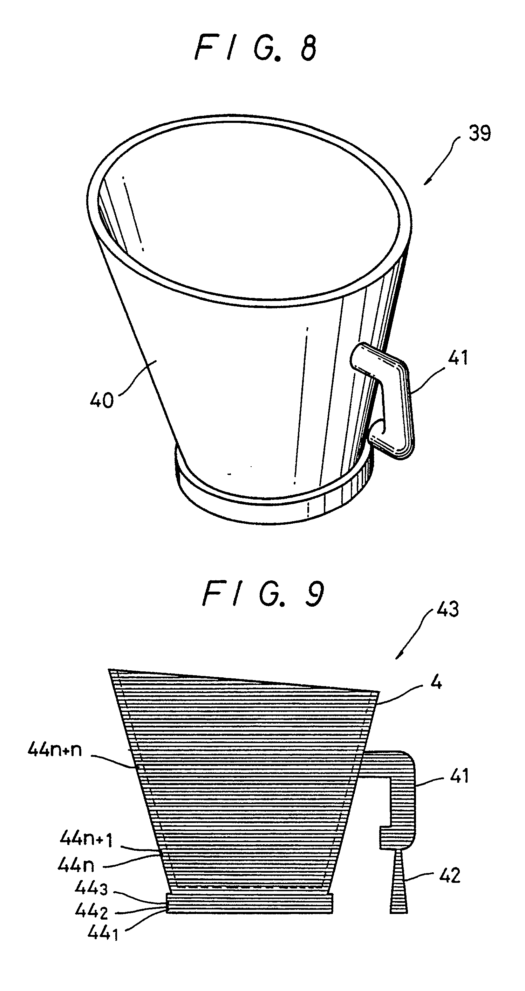

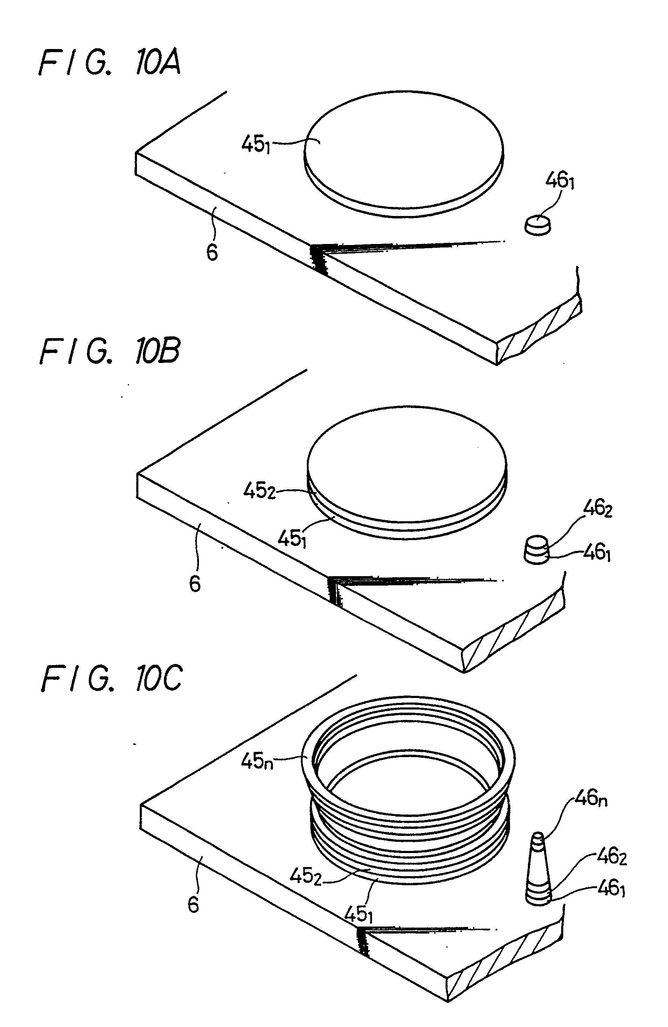

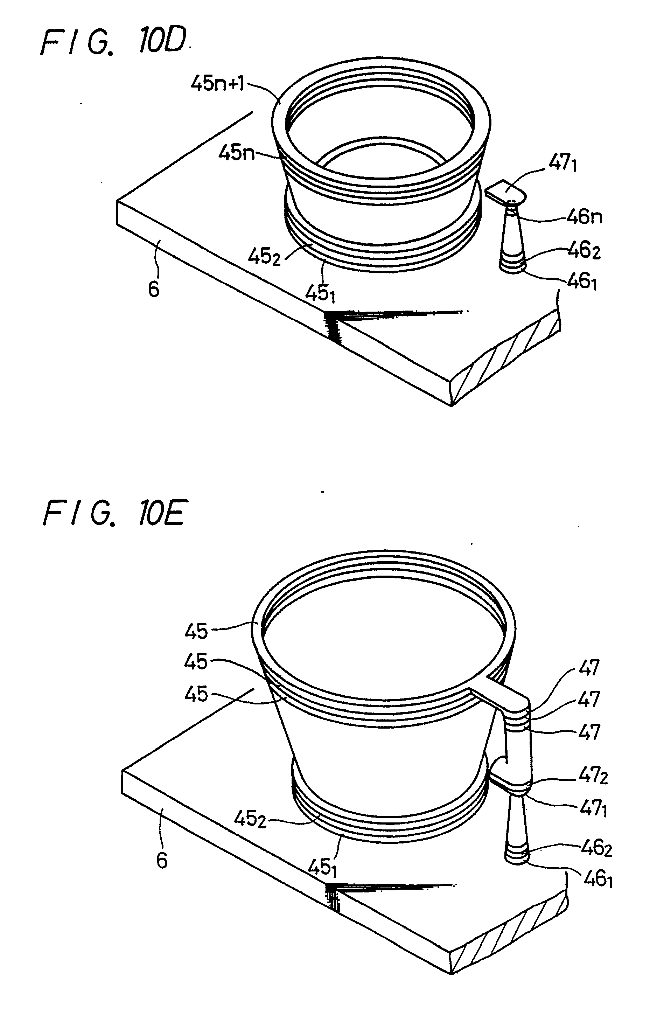

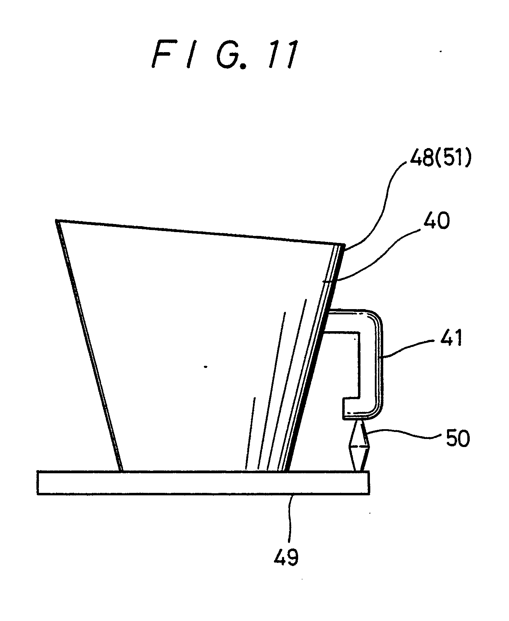

Fig. 1 is a side view illustrating an example of a prior-art apparatus for producing three-dimensional figure product, Fig. 2 is a perspective view of three-dimensional object image, Fig. 3 is a conceptual diagram showing the thus produced three-dimensional figure product in the form of being partly separated at every cured resin layer, Fig. 4 is a schematic diagram used to explain problems encountered with the prior-art method for producing three-dimensional figure product, Fig. 5 is a partially cutaway perspective view illustrating an example of a three-dimensional figure product producing apparatus according to the method of producing three-dimensional figure product of the present invention, Fig. 6 is a partially cutaway front view illustrating a working section of Fig. 5, Fig. 7 is a circuit block diagram showing a control section of Fig. 5, Fig. 8 is a perspective view illustrating a three-dimensional figure product according to an embodiment of a method for producing a three-dimensional figure product of the present invention, Fig. 9 is a front view illustrating a three-dimensional object image of the embodiment of the method for producing a three-dimensional object image according to the present invention, Fig. 10 is a perspective view illustrating a process for producing a three-dimensional figure product according to the present invention, and Fig. 11 is a front view illustrating another example of the three-dimensional figure product according to the present invention.

BEST MODE FOR CARRYING OUT THE INVENTION

An embodiment of a method for producing a three-dimensional figure product according to the present invention will hereinafter be described with reference to the drawings.

Initially, an example of a three-dimensional figure product producing apparatus which implements the three-dimensional figure product producing method of the present invention will be illustrated and then, the three-dimensional figure product producing method utilizing the three-dimensional figure product producing apparatus will be described.
(a. Three-dimensional figure product producing apparatus) [Figs. 5 to 7]

Throughout Figs. 5 to 7, reference numeral 1 designates a three-dimensional figure product producing apparatus which is comprised of a working section having a resin storage tank in which there is stored a liquid photo-curable resin, an elevator and the like, a beam scanning section for allowing an exposure beam to scan the liquid surface of the liquid photo-curable resin, a control section which controls the operation of the working section and the beam scanning section or the like. (a-1. Working section) [Figs. 5 and 6]

Reference numeral 2 designates a working section.

Reference numeral 3 designates a resin storage tank in which a liquid photo-curable resin 4 is stored.

The liquid photo-curable resin 4 must be presented in the form of liquid which can be cured by the irradiation of predetermined exposure beams. Further, the liquid photo-curable resin is requested to have such a bonding property that, when cured on the surface of the previously-cured portion, the liquid photo-curable resin may be stuck to the above-mentioned surface. Also, it is preferable that the viscosity of the liquid photo-curable resin is as small as possible. As the liquid photo-curable resin 4 having such characteristics, it is possible to use, for example, a UV-curable denatured acrylate.

Reference numeral 5 designates an elevator (also shown in Figs. 7 and 8) which is comprised of a horizontal plate-shaped stage 6 located at the lower end thereof. A nut 8 is secured to its upper end 7 and the nut 8 is engaged with a feed screw 10 which is rotated by a stepping motor 9 so that, when the feed screw 10 is rotated, the nut 8 is moved along the feed screw 10 in its axial direction, thereby the elevator 5 being moved in the up and down direction.

The elevator 5 is located such that the stage 6 thereof is kept in the liquid photo-curable resin 4 stored in the resin storage tank 3. The elevator is also moved stepwise at a predetermined pitch.
(a-2. Beam scanning section) [Figs. 5 and 6]

Reference numeral 11 designates a beam scanning section.

Reference numeral 12 designates a glavanoscanner which deflects the exposure beam emitted from a laser beam oscillator, which will be described later, in the left and right direction (this direction will be referred to hereinafter as [first scanning direction]) in Fig. 6 relative to a liquid surface 4a of the liquid photo-curable resin 4. Reference numeral 13 designates a galvanoscanner which deflects the exposure beam in the direction (referred to hereinafter as [second scanning direction]) perpendicular to the first scanning direction. These galvanoscanners 12 and 13 are comprised of drive sections 15, 15' having rotary shafts 14, 14' which are rotatable around their axial directions at high speed and galvanomirrors 16, 16' secured to the rotary shafts 14, 14'.

In one galvanoscanner 12 (referred to hereinafter as [first galvanoscanner]) of these two galvanoscanners 12 and 13, the axial direction of the rotary shaft 14 thereof is extended in the direction parallel to the second scanning direction. Further, the galvanomirror 16 thereof is located substantially right over the stage 6 of the elevator 5. In the other galvanoscanner 13 (referred to hereinafter as [second galvanoscanner]), the axial direction of the rotary shaft 14' is extended along the up and down direction, and a reflection surface 16'a of the galvanomirror 16' is opposed to the reflection surface 16a of the galvanomirror 16 of the first galvanoscanner 12 from the lateral direction.

Reference numeral 17 designates a laser beam oscillator which emits a predetermined exposure beam 18, for example, argon ion laser having a wavelength of 360 nm (nanometers) or helium cadmium laser having a wavelength of 325 nm. Reference numerals 19 and 20 designate total reflection mirrors which totally reflect the exposure beam 18 emitted from the laser beam oscillator 17 in sequence in a predetermined direction so that the exposure beam becomes incident on the galvanomirror 16' of the second galvanoscanner 13. Reference numeral 21 designates an A/O modulator (acousto-optic modulator) which is provided between the two total reflection mirrors 19 and 20. Reference numeral 22 designates a focus controller having a focusing lens 23 and is provided between one total reflection mirror 20 and the seecond galavanoscanner 13.

Accordingly, the exposure beam 18 emitted from the laser beam oscillator 17 is reflected toward the A/O modulator 21 by the total reflection mirror 19 and is controlled to travel through a future light path by the ON-OFF control of a switching operation of the A/O modulator 21. When the switching operation of the A/O modulator 21 is set in its ON state, the exposure beam is introduced into the total reflection mirror 20, wherein it is reflected toward the focusing lens 23. When the exposure beam passes the focusing lens 23, a bundle of light thereof is converged and sequentially reflected by the two galvanomirrors 16, 16', thereby the exposure beam being irradiated on the liquid photo-curable resin 4 from above. The exposure beam 18 is focused in a bundle of light by the focusing lens 23 so that it is always focused on the liquid surface 4a of the liquid photo-curable resin 4 as a beam spot 24 of a predetermined spot diameter. Further, when the rotary shaft 14 of the first galvanoscanner 12 is rotated to swing the galvanomirror 16, the exposure beam scans the liquid surface 4a of the liquid photo-curable resin 4 in the first scanning direction. When the rotary shaft 14' of the second galvanoscanner 13 is rotated to swing the galvanomirror 16', the exposure beam scans the liquid surface 4a of the liquid photo-curable resin 4 in the second scanning direction.

(a-3. Control section) [Figs. 5 to 7]

Reference numeral 25 designates a control section.

Reference numeral 26 designates an elevator position detecting sensor which is provided in parallel to the feed screw 10. Reference numeral 27 designates an elevator controller. This elevator controller is supplied with a signal indicative of the position of the elevator 5 detected by the sensor 26 and controls the revolution of the stepping motor 9 in response to the input signal, thus the position of the elevator 5 being controlled.

Reference numeral 28 designates an A/O modulator controller which controls the switching operation of the A/O modulator 21. Reference numeral 29 designates a galvanocontroller, and the operations of the A/O modulator controller 28, the galvanoscanners 12, 13 and the focus controller 22 are controlled by the commands from the galvanocontroller 29.

Reference numeral 30 designates a circuit in such control section 25.

Reference numeral 31 designates a memory which is connected to a three-dimensional figure product programming apparatus, not shown, for example, a so-called CAD. This memory is supplied with pixel signals exploded by the X and Y directions of the exploded plane of a certain or desired three-dimensional object image designed by the three-dimensional figure product programming apparatus and temporarily stores these pixel signals.

Reference numeral 32 designates a modulating circuit which is connected to the memory 31. This modulating circuit 32 modulates each of the pixel signals of the exploded planes temporarily stored in the memory 31 into coordinate signals indicating a raster, i.e., the position at which the exposure beam 18 scans the scanning area of the liquid surfaoe 4a of the liquid photo-curable resin 4.

Reference numeral 33 designates a beam position control circuit which includes the memory 31 and the modulating circuit 32.

Reference numerals 34a and 34b designate D/A converting circuits which are connected to the modulating circuit 32. Reference numerals 35a and 35b designate gates connected respectively to the D/A converting circuits 34a and 34b and which are further respectively connected to the first and second galvanoscanners 12 and 13. Of the coordinate signals modulated by the modulating circuit 32, the signal in the X direction, i.e., in the first scanning direction is converted to an analog signal by the D/A converting circuit 34a, passed through the gate 35a and is then fed to the drive section 15 of the first galvanoscanner 12. The coordinate signal in the Y direction, i.e., in the second scanning direction is converted to an analog signal by the D/A converting circuit 34b, passed through the gate 35b and is then fed to the drive section 15' of the second galvanoscanner 13. When supplied with the input signals, the drive sections 15 and 15' are driven to swing the galvanomirrors 16 and 16', respectively.

The scanning of the exposure beam 18 is performed according to, for example, the raster-scanning system. Each time the scanning of one scanning line in the first scanning direction is ended, the gate 35b is opened in an instant to slightly rotate the galvanomirror 16' of the second galvanoscanner 13, whereby the line position of the line scanning by the exposure beam 18 is moved to the adjacent line in the second scanning direction.

Reference numeral 36 designates an A/O modulator drive circuit connected to the beam position control circuit 33. This circuit supplies the A/O modulator 21 with a control signal responsive to the existence or absence of a signal on one line in the X direction of the plane data or a signal on one line in the Y direction to ON-OFF control the light path of the exposure beam 18 emitted from the laser beam oscillator 17 succeeding the A/O modulator 21.

Reference numeral 37 designates a focus control circuit which controls the position of the focusing lens 23 in the focusing direction so that the exposure beam 18 of predetermined spot diameter is always converged on the liquid surface 4a of the liquid photo-curable resin 4.

Reference numeral 38 designates a motor drive circuit. The aforenoted stepping motor 9 is driven by the command from the motor drive circuit 38. In this driving, when the forming operation of the three-dimensional figure product is started, the elevator 5 is controlled so that the stage 6 is moved to the position (referred to hereinafter as [initial position]) lower than the liquid surface 4a of the liquid photo-curable resin 4 by one layer pitch, i.e., the exploded pitch at which the three-dimensional object image is exploded into a large number of exploded planes. After the forming operation is started, the elevator 5 is moved downwards by one layer pitch each time the scanning of beam on one exploded plane is ended.

(b. Method for producing a three-dimensional figure product) [Fig. 5 and Figs. 8 to 11]

A three-dimensional figure product is produced by utilizing the three-dimensional figure product producing apparatus 1 as follows.

Reference numeral 39 designates a three-dimensional figure product to be formed. This three-dimensional figure product is comprised of a cup-shaped cup body 40 and a grip portion 41 of an inverted L-letter shape attached to the outer periphery of the cup body 40.

When such three-dimensional figure product 39 is produced, the three-dimensional figure product 39 added with a dummy portion 42 (Fig. 9) is produced on the basis of a three-dimensional object image 43 in which the dummy portion 42 is added to the lower portion of the grip portion 41.

Although the shape and the size of the dummy portion 42 are not specified, at least it is requested that its lower end face exists on the same plane of the lower end face of the cup body 40 in the horizontal direction and that its lower end face is made continuous with the lower end portion of the grip portion 41.

Further, the shape of the dummy portion 42 is preferably stabilized well so that the shape of the horizontal cross section of the dummy portion 42 is increased in the lower end portion thereof. From this standpoint, the dummy portion 42 is designed to be substantially a cone.

When the forming operation is started, the elevator 5 is moved to the initial position and the liquid photo-curable resin 4 having a thickness of one layer pitch is located on the upper surface of the stage 6 of the elevator 5.

Under this condition, the exposure beam 18 scans the liquid surface 4a of the liquid photo-curable resin 4 at its area corresponding to the stage 6 of the elevator 5. The scanning is performed on each of the exploded planes 44, 44, ... of the three-dimensional figure product, and the scanning is sequentially performed on a number of exploded planes 44, 44, ... from the exploded plane located in the lowermost position in that order.

More specifically, when the first exposure is carried out, as shown in Fig. 10A, the liquid photo-curable resin 4 on the stage 6 is cured in the same shape as that of the lowermost exploded plane 44, of the three-dimensional object image 43, whereby a sheet-shaped cured resin layer $45_1$ of the same shape as the lower end face of the cup body 40 and a cured resin layer $46_1$ of the same shape as the lower end face of the dummy portion 42 are formed on the stage 6.

When the cured resin layer for one exploded plane 44 is formed, the elevator 5 is moved downwards by one layer pitch, thus allowing the liquid photo-curable resin 4 having the thickness of one layer pitch to be flowed onto the previously-cured resin layers $45_1$ and $46_1$.

Then, the scanning of the exposure beam 18 is performed on the second exploded plane $44_2$ of the three-dimensional object image 43 from below, whereby a cured resin layers $45_2$ and $46_2$ corresponding to the second exploded plane $44_2$ are formed as shown in Fig. 10B. When cured, these cured resin layers $45_2$ and $46_2$ are respectively bonded to and unitarily formed with the upper surfaces of the previously-cured resin layers $45_1$ and $46_1$.

Thus, the above-mentioned operations are repeatedly carried out to sequentially laminate the cured resin layers $45_1$ and $45_2$, ... with respect to the cup body 40 and the cured resin layers $46_1$ and $46_2$ ... with respect to the dummy portion 42 on the stage 6, respectively. When the exposure on the exploded plane $44_n$ including the upper end face of the dummy portion 42 is ended, as shown in Fig. 10C, cured resin layers $45_n$ and $46_n$ are formed and the dummy portion 42 is finished at that time point.

When an $(n+1)$'th exploded plane $44_{n+1}$, that is, the exploded plane including the lower end face of the grip portion 41 is exposed, as shown in Fig. 10D, a cured resin layer $45_{n+1}$ with respect to the cup body 40 is formed and a cured resin $47_1$ with respect to the lower end face of the grip portion 41 is formed. The cured resin layer $47_1$ is bonded at substantially a central portion thereof to the uppermost cured resin layer $46_n$ of the dummy portion 42 so that the cured resin layers of the grip portion 41 are sequentially laminated on the dummy portion 42. The cured resin layers are formed under the condition that they are supported on the stage 6 through the previously-formed dummy portion 42.

Therefore, after the condition shown in Fig. 10E, the three-dimensional object image (see Figs. 5 and 6) having the same shape as that of the three-dimensional object image 43 is formed on the stage 6.

(b-1. Removal of dummy section or the like)

After the three-dimensional object is formed on the basis of the three-dimensional object image 43, the dummy section 42 is removed. This removal is performed by cutting the dummy section 42 at its upper end from the grip portion 41 by suitable tools.

Therefore, the three-dimensionl figure product 39 is obtained by removing the dummy section 42.

In the thus produced three-dimensional figure product 39, the cured resin layers are laminated on any of the cup body 40 and the grip portion 41 under the condition that they are directly or indirectly supported to the stage 6. Thus, the three-dimensional figure product can be prevented from being distorted partially and the three-dimensionl figure product of the designed three-dimensional object image can be embodied at high accuracy.

(b-2. Modified example) [Fig. 11]

Fig. 11 shows a modified example of the three-dimensional figure product according to the method for producing three-dimensional figure product of the present invention.

In a three-dimensional figure product 48 to be produced in this example, a flange portion 49 is elongated in the lateral direction from the lower end edge of the cup body 40 of the three-dimensional figure product 39 in the aforenoted embodiment, and one portion of the flange portion 49 is located under the grip portion 41.

When such three-dimensional figure product 48 is produced, a three-dimensional figure product is produced on the basis of a three-dimensional object image 51 in which a dummy portion 50 is constructed between the flange portion 49 and the grip portion 41. After the three-dimensional figure product is finished, the dummy portion 50 is removed.

As is clear from the above description, according to the three-dimensional image producing method of the present invention, the beam is irradiated on the liquid surface of the liquid photo-curable resin to form the cured resin layers of patterns corresponding to the shapes of the exploded planes exploded in one direction of the three-dimensional object image that is freely designed. In the next process, the cured resin layers are sequentially laminated in such a manner that the liquid photo-curable resin is located on the cured resin layer and the beam is again irradiated on the liquid surface of the liquid photo-curable resin to laminate the cured resin layer to thereby form a desired three-dimensional figure product. This method for producing three-dimensional figure product is characterized in that, when the three-dimensional figure product is partly branched at its middle portion in the lateral direction and has a branched portion which does not reach the lowermost portion of the three-dimensional figure product, the continuous dummy cured resin layer is formed beforehand on the lower side of the branched portion.

Therefore, according to the method for producing three-dimensional figure product of the present invention, when the three-dimensional figure product is partly branched at its middle portion in the lateral direction and has the branched portion which does not reach the lowermost portion of the three-dimensional figure product, the branched portion can be prevented from being floated in the liquid photo-curable resin and the cured resin layers laminated can be prevented from being displaced positionally. Thus, a desired three-dimensional figure product can be produced at high accuracy.

While the branched portion is the three-dimensional figure product which is protruded downwards from the side surface of the other portion in the above-described embodiment and modified example, the present invention is not limited thereto. The method for producing three-dimensional figure product of the present invention can achieve substantially similar effects if applied to the production of the three-dimensional figure product when the branched portion is the eaves protruded from other portion in substantially the horizontal direction or in the upper direction.

While the three-dimensional figure product producing apparatus shown in the above-described embodiment is described as one example of the apparatus for carrying out the method for producing three-dimensional figure product of the present invention, the kinds of the liquid photo-curable resin, the kinds of the exposure beam, the shapes of the three-dimensional figure product and so on are not limited to those described in the embodiments. The present invention is not limited to the above-described embodiments and it is needless to say that various modifications and variations thereof could be effected.

EXPLANATION ON REFERENCE NUMERALS

Reference numeral 4 designates the liquid photo-curable resin, 4a the liquid surface, 18 the beam, 39 and 48 the three-dimensional figure products, 41 the branched portion, 42 and 50 the dummy cured resin layers, 43 and 51 the three-dimensional object images, and 45, 46 and 47 the cured resin layers.

## Claims

1. In a method for producing a three-dimensional figure product wherein cured resin layers are sequentially laminated such that a beam is irradiated on a liquid surface of a liquid photo-curable resin to form a cured resin layer of pattern corresponding to the shape of an exploded plane exploded in one direction of a three-dimensional object image freely designed, the liquid photo-curable resin is located on said cured resin layer and a beam is again irradiated on the liquid surface of said liquid photo-curable resin to laminate a cured resin layer, said method for producing a three-dimensional figure product characterized in that, when said three-dimensional figure product is partially branched at its middle portion in the lateral direction and has a branched portion which does not reach the lowermost portion of the three-dimensional figure product, a continuous dummy cured resin layer is formed beforehand on the lower side of said branched portion.

2. The method for producing a three-dimensional figure product according to claim 1, wherein said dummy cured resin layer is formed such that after the production of said three-dimensional figure product is ended, said dummy cured resin layer may be separated from said three-dimensional figure product.

3. The method for producing a three-dimensional figure product according to claim 1, wherein the lowermost end face of said dummy cured resin layer is placed on the same plane as the lowermost end face of said three-dimensional figure product.

4. The method for producing a three-dimensional figure product according to claim 3, wherein said dummy cured resin layer is sequentially laminated together with the cured resin layer of said three-dimensional figure product.

5. In a method for producing a three-dimensional figure product wherein cured resin layers are sequentially laminated such that a beam is irradiated on a liquid surface of a liquid photo-curable resin to form a cured resin layer of pattern corresponding to the shape of an exploded plane exploded in one direction of a three-dimensional object image freely designed, the liquid photo-curable resin is located on said cured resin layer and a beam is again irradiated on the liquid surface of said liquid photo-curable resin to laminate a cured resin layer, said method for producing a three-dimensional figure product characterized in that, when said three-dimensional figure product has a branched portion whose lowermost end portion is located above the lowermost end face of said three-dimensional figure product, a positioning cured resin layer is continuously formed on the lowermost end portion of said branched portion.

6. The method for producing a three-dimensional figure product according to claim 5, wherein said positioning cured resin layer is formed at the position distant from the lowermost end face of said three-dimensional figure product in accordance with the formation of said three-dimensional figure product before said branched portion is formed.

7. The method for producing a three-dimensional figure product according to claim 5, wherein said positioning cured resin layer is similarly formed by sequentially laminating the cured resin layers as said three-dimensional figure product is formed by sequentially laminating the cured resin layers.

8. The method for producing a three-dimensional figure product according to claim 6, wherein a lowermost end face of said positioning cured resin layer is placed on the same plane as that of a lowermost end face of said three-dimensional figure product.

9. The method for producing a three-dimensional figure product according to claim 8, wherein said positioning cured resin layer can be separated from the lowermost end face of said branched portion.

# F I G. 1

# F I G. 2

# F I G. 3

ℓn

ℓ

ℓ

m

ℓ
ℓ
ℓ

ℓ
ℓ
ℓ
ℓ
ℓ

ℓ₃

ℓ₂

ℓ₁

# FIG. 4

FIG. 5

# F I G. 6

F I G. 7

# F I G. 8

39

40

41

# F I G. 9

43

4

$44_{n+n}$

41

$44_{n+1}$

$44_n$

$44_3$

$44_2$

$44_1$

42

$F I G. \ 10A$

$45_1$

$46_1$

6

$F I G. \ 10B$

$45_2$

$45_1$

$46_2$

$46_1$

6

$F I G. \ 10C$

$45_n$

$46_n$

$45_2$

$46_2$

$45_1$

$46_1$

6

FIG. 10D.

$45n+1$

$45n$

$47_1$

$46n$

$46_2$

$452$

$461$

$45_1$

6

FIG. 10E

45

45

45

47

47

47

$47_2$

$47_1$

$452$

$46_2$

$45_1$

$46_1$

6

# F I G. 11

# INTERNATIONAL SEARCH REPORT

International Application No  PCT/JP90/00370

| I. CLASSIFICATION OF SUBJECT MATTER (if several classification symbols apply, indicate all) [6] |
|---|
| According to International Patent Classification (IPC) or to both National Classification and IPC |

Int. Cl[5]    B29C67/00, 35/08, 35/10, 39/02,
G03F7/20, 7/26, G05D3/00, G06F15/60

| II. FIELDS SEARCHED |
|---|
| Minimum Documentation Searched [7] |

| Classification System | Classification Symbols |
|---|---|
| IPC | B29C67/00, 35/08, 35/10, 39/02, G03F7/20, 7/26, G05D3/00, G06F15/60 |

Documentation Searched other than Minimum Documentation
to the Extent that such Documents are Included in the Fields Searched [8]

| Jitsuyo Shinan Koho | 1926 – 1989 |
|---|---|
| Kokai Jitsuyo Shinan Koho | 1971 – 1989 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| X | JP, B2, 63-40650 (Osaka Prefecture), 12 August 1988 (12. 08. 88), Scope of Claim, Fig. 1, Fig. 4 and the explanation (Family: none) | 1 – 9 |
| Y | JP, A, 56-144478 (Hideo Kodama), 10 November 1981 (10. 11. 81), Scope of Claim (Family: none) | 1 – 9 |
| Y | JP, A, 62-35966 (UVP Inc.), 16 February 1987 (16. 02. 87), Scope of Claim (Family: none) | 1 – 9 |
| Y | US, A, 4,041,476 (Wyn Kelly Saiainson), 9 August 1977 (09. 08. 77), Scope of Claim (Family: none) | 1 – 9 |

[*] Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

## IV. CERTIFICATION

| Date of the Actual Completion of the International Search | Date of Mailing of this International Search Report |
|---|---|
| April 27, 1990 (27. 04. 90) | May 21, 1990 (21. 05. 90) |

| International Searching Authority | Signature of Authorized Officer |
|---|---|
| Japanese Patent Office | |

Form PCT/ISA/210 (second sheet) (January 1985)